# EUROPEAN PATENT APPLICATION

(11) **EP 1 647 476 A2**
(43) Date of publication of application: **19.04.2006**
(21) Application number: 05022675.2
(22) Date of filing: 18.10.2005
(51) Int. Cl.: B62K 11/06, B62K 11/10

(54) **Vehicle body frame and motorcacle provided with the vehicle body frame**

(30) Priority: 18.10.2004 JP 2004303489; 07.10.2005 JP 2005294466
(71) Applicant: YAMAHA HATSUDOKI KABUSHIKI KAISHA, Iwata-shi Shizuoka-ken (JP)
(72) Inventor: Asamura, Kinji, Iwata-shi Shizuoka-ken (JP)
(74) Representative: Grünecker, Kinkeldey, Stockmair & Schwanhäusser Anwaltssozietät

(57) **Abstract**

The present invention relates to a vehicle body frame, in particular for motorcycles, having joined frame pieces (5a,5b), wherein reinforcement portions (5g) are formed on side surfaces of the frame pieces (5a,5b) to extend longitudinally of a vehicle, and either of lower portions and upper portions of the frame pieces (5v), which border on the reinforcement portions (5g), are expanded outward relative to the other in a vehicle width direction.

## Description

The present invention relates to a vehicle body frame, in particular for motorcycles, particularly provided by joining left and right frame pieces, which are positioned on the left and the right in a vehicle breadth direction and formed by casting of a light alloy, and a motorcycle provided with the vehicle body frame.

A vehicle body frame for motorcycles generally comprises a head pipe, by which a handle is supported to be freely steered left and right, and a main frame extending rearward from the head pipe to support an engine unit.

From the viewpoint of achieving reduction in weight and enhancing rigidity as a strength member, such vehicle body frame is in some cases manufactured by metal mold casting (die casting) of a light alloy. For example, JP-A-2002-326593 adopts a construction, in which a vehicle body frame is divided into a left frame piece and a right frame piece, the respective frame pieces are formed by casting, and a hollow portion is provided inside by joining the left and right frame pieces together.

By the way, with a vehicle body frame of a type having a hollow portion inside, a main frame that supports an engine unit essentially requires a relatively large wall surface, and such large wall surface is easy to ensure rigidity especially in a longitudinal direction. In order to achieve a further improvement (in particular, a longitudinal direction) of the vehicle body frame in rigidity, it is effective to enlarge side walls of left and right frame pieces in area. In the case where the left and right frames, respectively, are made separate castings as described above, it is possible to readily enlarge side walls of the left and right frame pieces in area.

However, when the side walls of the left and right frame pieces are simply enlarged in area, there is a fear that there is caused a decrease in rigidity for prevention of deformation of wall surfaces in a direction perpendicular to the surfaces, and there is also caused a problem that flat surfaces are increased to provide for a simple outward appearance.

The invention has been thought of in view of the situation and has its object to provide a vehicle body frame, which makes it possible to prevent a decrease in rigidity of wall surfaces against deformation and to achieve an improvement in outward appearance in the case where side walls of left and right frames are enlarged in area, and a motorcycle provided with such a vehicle body frame.

This objective is solved in an inventive manner by a vehicle body frame, in particular for motorcycles, having joined frame pieces, wherein reinforcement portions are formed on side surfaces of the frame pieces to extend longitudinally of a vehicle, and either of lower portions and upper portions of the frame pieces, which border on the reinforcement portions, are expanded outward relative to the other in a vehicle width direction.

Preferably, the vehicle body frame is provided by joining left and right frame pieces, which are positioned on the left and the right in the vehicle width direction and are formed by casting of a light alloy, wherein the reinforcement portions are formed on side surfaces of the left and right frame pieces to extend longitudinally of the vehicle, and either of lower portions and upper portions of the left and right frame pieces, which border on the reinforcement portions, are expanded outward relative to the other in a vehicle width direction.

Further, preferably the left and right frame pieces comprise left and right frame piece portions, which extend from a head pipe, which supports a front fork, toward the rear of a vehicle, and support an engine unit, the left and right frame piece portions include wall surfaces extending in a vertical direction and a longitudinal direction, and the reinforcement portions are formed on the wall surfaces.

Still further, preferably the frame pieces are weld-bonded.

Yet further, preferably the reinforcement portions are different in level.

According to a preferred embodiment, the lower portions on the side surfaces of the frame pieces are expanded outward relative to the upper portions in the vehicle width direction.

Therein, preferably lower reinforcement portions are formed on the lower portions to extend longitudinally of the vehicle, and reinforcement lower portions bordering on the lower reinforcement portions of the lower portions are recessed inward relative to reinforcement upper portions in the vehicle width direction.

According to a further preferred embodiment, the vehicle body frame further comprises a vehicle body cover that covers the vehicle body frame so as to have the expanded portions exposed outside.

According to another embodiment, outer surfaces of at least one of the upper portions and the lower portions on the side surfaces of the frame pieces, which border on the reinforcement portions, are subjected to surface preparation.

Therein, preferably those portions on the side surfaces of the frame pieces, which are expanded outward in the vehicle width direction, are subjected to buffing.

According to yet another embodiment, joint portions of the left and right frame pieces are covered by a cover.

Therein, preferably the cover is fixed in a location away from the joint portions of the left and right frame pieces, and a clearance is formed between the cover and the joint portions.

According to still another embodiment, either the upper portions or the lower portions of the frame pieces, which border on the reinforcement portions, are formed with a boss for mount of a part.

Therein, preferably the boss serves for mounting of a cover, which covers the joint portions of the left and right frame pieces, or for mounting of a foot board.

Beneficially, the vehicle body frame may further comprise a cross member that connects the other of the upper portions or the lower portions of the frame pieces, which border on the reinforcement portions.

The above object is also solved in an inventive manner by a motorcycle comprising the vehicle body frame according to one of the above embodiments.

In the following, the present invention is explained in greater detail with respect to several embodiments thereof in conjunction with the accompanying drawings, wherein:
- Fig. 1: is a side view showing a motorcycle, to which a vehicle body frame according to an embodiment is applied,
- Fig. 2: is a side view showing the vehicle body frame,
- Fig. 3: is a perspective view showing the vehicle body frame,
- Fig. 4: is a plan view showing the vehicle body frame,
- Fig. 5: is a cross sectional view showing a head pipe of the vehicle body frame,
- Fig. 6: is a cross sectional view showing a main frame of the vehicle body frame (a cross sectional view taken along the line VI-VI in Fig. 2),
- Fig. 7: is a cross sectional view showing the main frame (a cross sectional view taken along the line VII-VII in Fig. 2),
- Fig. 8: is a cross sectional view showing pivots of the main frame (a cross sectional view taken along the line VIII-VIII in Fig. 2), and

- Fig. 9: is a cross sectional view showing a modification of a reinforcement portion of the main frame.

An embodiment will be described below with reference to the drawings.

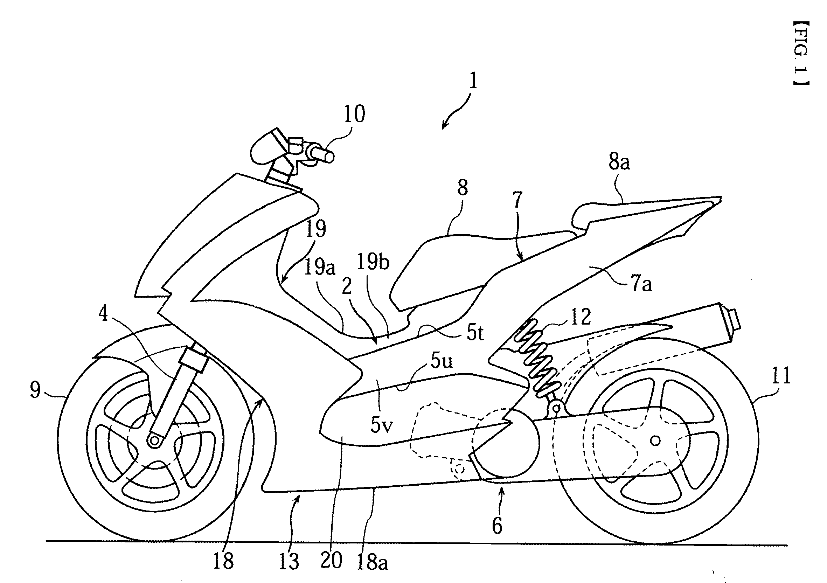

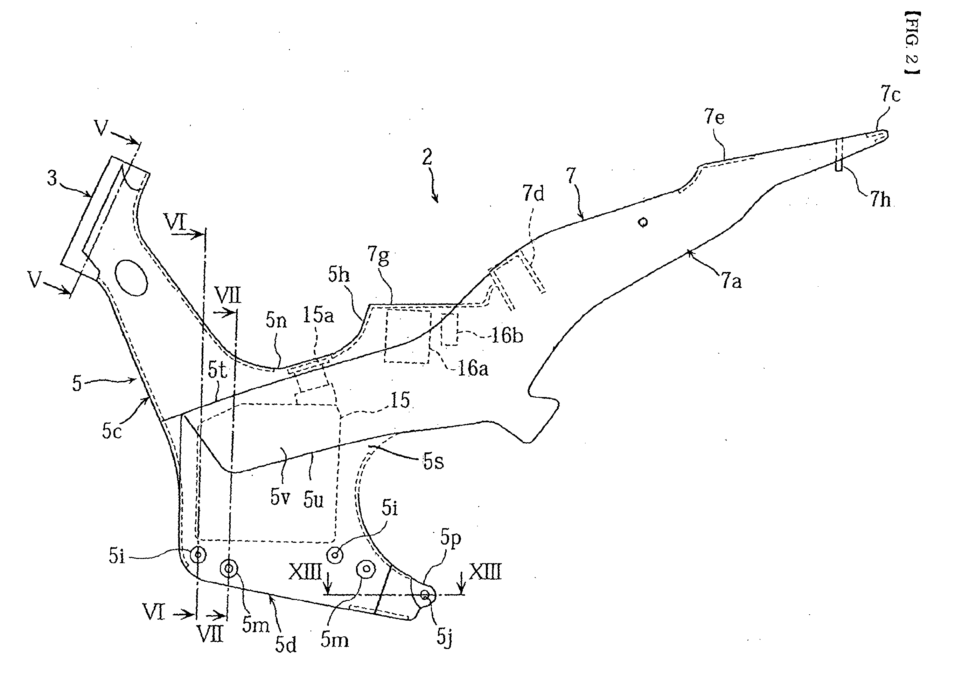

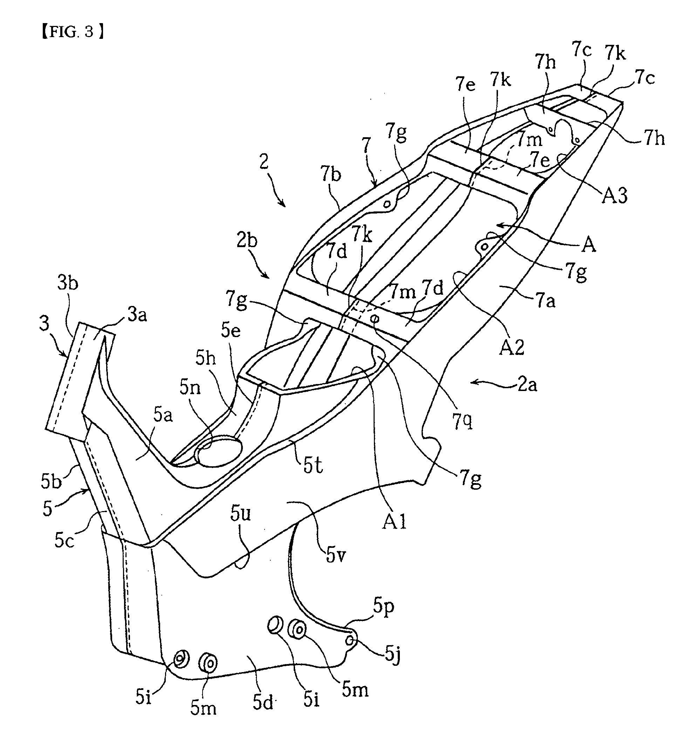

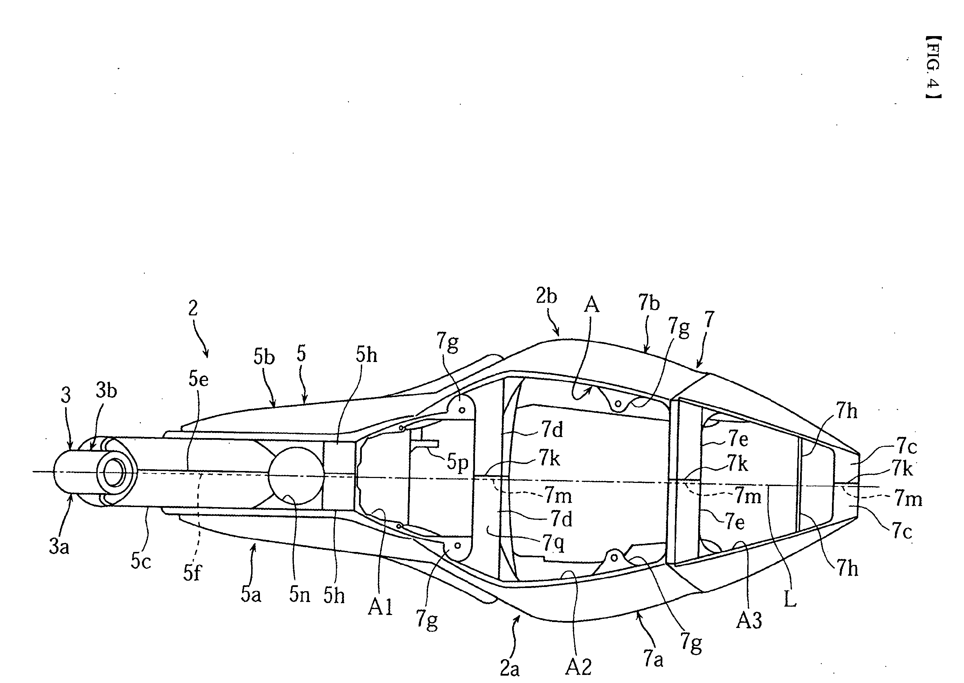

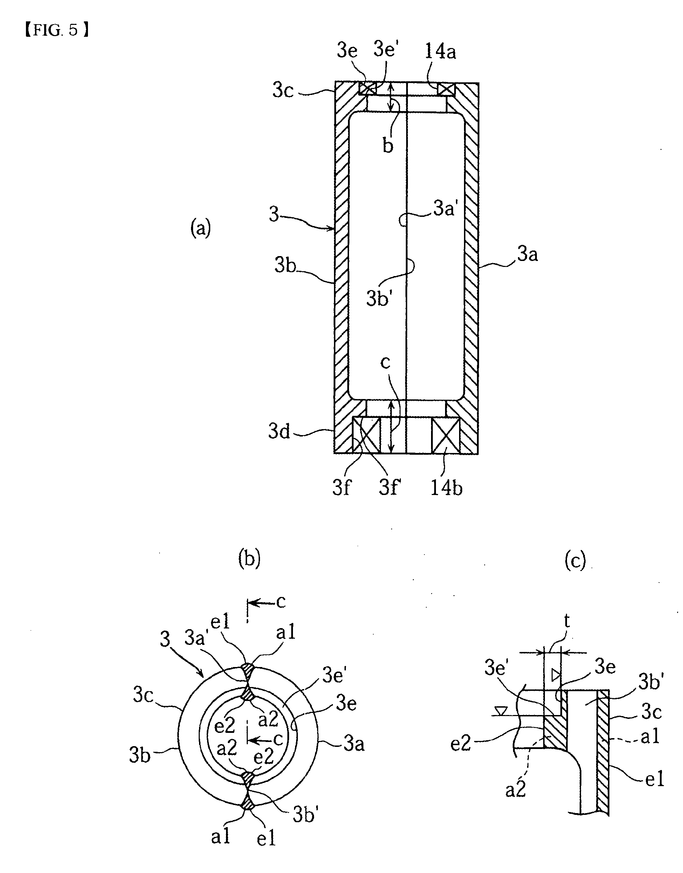

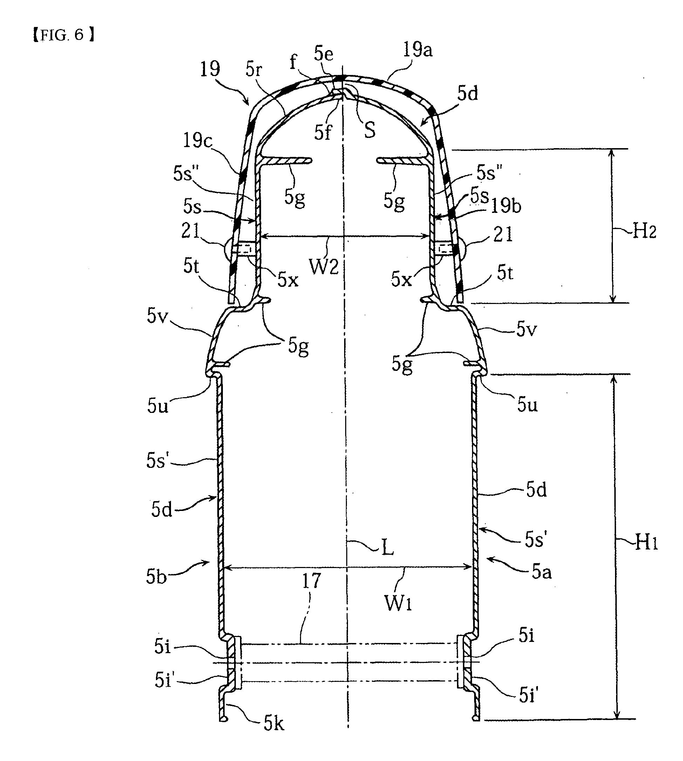

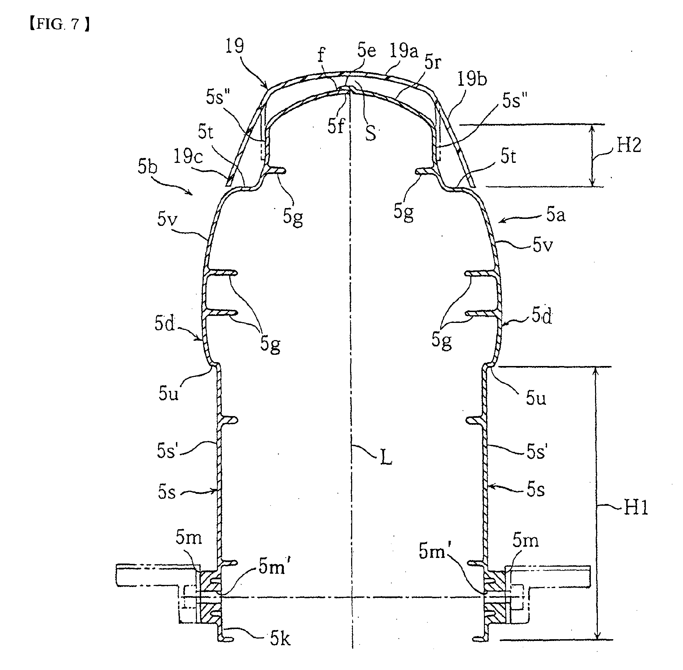

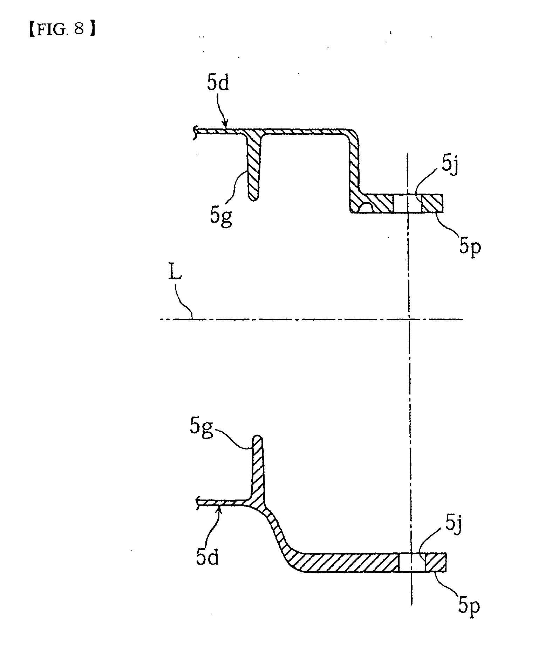

Figs. 1 to 8 are views illustrating a vehicle body frame for motorcycles, according to an embodiment, Fig. 1 is a left side view showing a motorcycle, to which the vehicle body frame according to the embodiment is applied, Figs. 2, 3 and 4, respectively, are a left side view, a perspective view, and a plan view showing the vehicle body frame, Fig. 5 is a cross sectional view showing a head pipe (a cross sectional view taken along the line V-V in Fig. 2), Figs. 6 and 7 are cross sectional views showing a suspension part of a main frame (a cross sectional view taken along the line VI-VI, and a cross sectional view taken along the line VII-VII in Fig. 2), and Fig. 8 is a cross sectional view showing pivots of the main frame (a cross sectional view taken along the line VIII-VIII in Fig. 2). In addition, front, rear, left, right, upper, and lower in the embodiment indicate the positional relationship as viewed in a state of being seated on a seat.

In the drawings, the reference numeral 1 denotes a motorcycle having the following schematic construction. A front fork 4 is supported by a head pipe 3 at a front end of a vehicle body frame 2 to be freely steered left and right, an engine unit 6 is supported by a rear portion of a main frame 5, which extends rearwardly of the head pipe 3, to freely swing vertically, and a main seat 8 and a tandem seat 8a are mounted on an upper surface of a rear frame 7, which extends rearward and obliquely upward from the main frame 5. The front fork 4 supports a front wheel 9 at a lower end thereof and arranges a steering handle 10 at an upper end thereof. Also, a rear wheel 11 is supported at a rear end of the engine unit 6 and a cushioning unit 12 for suspension of the rear wheel is arranged between a central portion of the engine unit 6 in a longitudinal direction and a front portion of the rear frame 7. A vehicle body cover 13 surrounds a periphery of that portion of the vehicle body frame 2, which extends from the head pipe 3 to the main frame 5.

The vehicle body frame 2 is formed by metal mold casting of an aluminum alloy, more specifically, left and right frame pieces 2a, 2b, which form left and right portions of the vehicle body frame in a vehicle breadth direction, are formed by metal mold casting, and the left and right frame pieces 2a, 2b are joined together by welding.

The left and right frame pieces 2a, 2b are formed by integrally forming left and right head piece portions 3a, 3b, which form portions of the head pipe 3, left and right main piece portions 5a, 5b, which form portions of the main frame 5, and left and right rear piece portions 7a, 7b, which form portions of the rear frame 7.

The weld-bonding work of the left and right frame pieces 2a, 2b is performed in a state, in which the left and right frame pieces 2a, 2b are first set in a positioning jig, the left and right head piece portions 3a, 3b are butted against each other, and positioning is made by relatively moving the left and right main piece portions 5a, 5b and the left and right rear piece portions 7a, 7b in the vehicle breadth direction with the left and right head piece portions 3a, 3b as a reference. The welding work is performed to proceed from a portion having a small heat capacity to a portion having a large heat capacity, that is, in the order from a region being small in thickness or area to a region being large in thickness or area.

The rear frame 7 is formed to cooperate with an upper rear edge 5h of the main frame 5 to generally define an annular shape as viewed in plan view (from above). Specifically, an annular opening A having a substantially rectangular shape being lengthy in the longitudinal direction of the vehicle is formed by the upper rear edge 5h of the main frame 5, the left and right rear piece portions 7a, 7b integrally extending rearward from the upper rear edge 5h, and rear end cross portions 7c, 7c connecting rear ends of the both rear piece portions 7a, 7b together. More specifically, the left and right rear piece portions 7a, 7b expand outward from the rear edge 5h of the main frame 5 to be inclined so as to be positioned inward as they go toward the rear end cross portions 7c as viewed in plan view, and are decreased in vertical dimension as they go rearward from the front as viewed in side view.

The left and right rear piece portions 7a, 7b of the rear frame 7 are formed integral with front and rear cross portions 7d, 7e, which extend toward a center of the vehicle, and lamp support portions 7h, 7h, which are positioned between the rear cross portions 7e and the rear end cross portions 7c to extend toward the center of the vehicle. A rear lamp unit (not shown) is mounted to the lamp support portions 7h.

The front cross portions 7d, 7d, the rear cross portions 7e, 7e, the rear end cross portions 7c, 7c, and the lamp support portions 7h, 7h overlap together to be movable in the vehicle breadth direction and immovable in the longitudinal direction, and the overlapping portions are weld-bonded. Specifically, joint flange portions 7k, respectively, are formed on the cross portions 7d, 7e, 7c and the lamp support portion 7h on the left in a manner to define steps, and respective joint edges 7m on the right are inserted on inner surfaces of the joint flange portions 7k to be relatively movable in the vehicle breadth direction and relatively immovable vertically. The respective overlapping portions are joined by welding.

The front cross portions 7d are downward C-shaped in transverse cross section, the front cross portion 7d on the left is formed with a cushion mount hole 7q, which is positioned outwardly of the vehicle from the vehicle center line L. An upper end of the cushioning unit 12 is connected to the mount hole 7q.

A space in the opening A of the left and right rear piece portions 7a, 7b makes an article storage space, and a battery 16a, a fuse box 16b, etc. are accommodated in a front opening A1 defined by the rear edges 5h, the left and right rear piece portions 7a, 7b, and the front cross portions 7d. Also, an article storage box (not shown) sized to be able to accommodate a raincoat or the like is arranged in a middle opening A2 defined by the front cross portions 7d, the left and right rear piece portions 7a, 7b, and the rear cross portions 7e.

The front opening A1 and the middle opening A2 are covered by the main seat 8 to be openable and closeable. Also, a rear opening A3 defined by the rear cross portions 7e and the rear end cross portions 7c is covered by the tandem seat 8a described above to be openable and closeable.

Outer surfaces of the left and right rear piece portions 7a, 7b are not covered by the vehicle body cover 13 but exposed outside to function as an exterior part. The outer surfaces of the left and right rear piece portions 7a, 7b are subjected to buffing to give luster.

The main frame 5 comprises an inclined part 5c extending obliquely downward from the head pipe 3 toward the rear of the vehicle, and a suspension part 5d extending contiguous to the inclined part 5c and rearward to accommodate a fuel tank 15, etc. and to suspend the engine unit 6.

As shown in Fig. 6, a portion of the inclined part 5c is closed in cross section to be substantially rectangular-shaped in transverse cross section, and integrally formed therein with a plurality of reinforcement ribs 5g, which project inward in the vehicle breadth direction. As shown in Figs. 6 and 7, the suspension part 5d is in the form of a box with a lower end thereof opened, and a plurality of reinforcement ribs 5g are integrally formed in the suspension part 5d to project inward in the vehicle breadth direction.

Weld-bonded portions of the left and right main piece portions 5a, 5b, which form the inclined part 5c and the suspension part 5d, are structured as follows. The left main piece portion 5a is formed on a facing edge thereof with a joint flange portion 5e, which defines a vertically outwardly expanded step, and a joint edge 5f of the right main piece portion 5b is inserted inside the joint flange portion 5e to be arranged so as to vertically overlap the joint flange portion relatively movably in the vehicle breadth direction and relatively immovably vertically.

Here, a little clearance is provided between the step of the joint flange portion 5e and a tip end of the joint edge 5f whereby the joint flange portion 5e and the joint edge 5f are made relatively movable in the vehicle breadth direction but relatively immovable vertically. A tip end of the joint flange portion 5e of the left main piece portion 5a and the joint edge 5f of the right main piece portion 5b are weld-bonded at overlapping portions thereof. The character f denotes a weld bead. The weld bead f extends along the vehicle center line L in a position offset substantially a width of the joint flange portion 5e from the vehicle center line L in the vehicle breadth direction.

The suspension part 5d includes a dome-shaped upper wall portion 5r thus weld-bonded, and longitudinal wall portions 5s, 5s extending substantially vertically downward from left and right end edges of the upper wall portion 5r, the suspension part being in the form of a box, of which a lower end is opened downward to include an article receipt port 5k, and an interior of the receipt port 5k defines a storage part to accommodate the fuel tank 15, etc. The left and right longitudinal wall portions 5s are enlarged in vertical dimension and in longitudinal dimension as compared with the main piece portions and substantially rectangular-shaped to be longitudinal. Thereby, the side walls are enlarged in area, so that the main frame 5 is enhanced in stiffness in vertical and longitudinal directions.

Pivots 5p, 5p having pivot holes 5j are formed on lower, rear ends of the left and right longitudinal wall portions 5s, 5s to project toward the rear of the vehicle. As shown in Fig. 8, the left pivot 5p is offset outward from the vehicle to separate from the vehicle center line L and the right pivot 5p is offset inwardly of the vehicle to approach the vehicle center line L, so that the pivot part for suspension of the engine is generally offset leftward from the vehicle.

A pair of front and rear bosses 5i' having bolt holes 5i are concavely provided at lower ends of the left and right longitudinal wall portions 5s, 5s to be stepwise inside the vehicle, and a pair of front and rear support brackets (cross members) 17, 17, which support the fuel tank 15, are fixed to the front and rear bosses 5i'. Also, an oil feed opening 5n is formed on the upper wall portion 5r, and an oil feed port 15a of the fuel tank 15 is positioned in the oil feed opening 5n. In addition, the support brackets 17, 17 act as cross members to ensure rigidity of the lower end of the suspension part 5d in the vehicle breadth direction. Thereby, the left and right frame pieces 2a, 2b are enhanced in rigidity. Also, a pair of front and rear foot board mount bosses 5m with threaded holes 5m' are formed at the lower ends of the left and right longitudinal wall portions 5s, 5s to project outward from the vehicle.

The left and right longitudinal wall portions 5s, 5s are formed with upper reinforcement portions 5t and lower reinforcement portions 5u to extend longitudinally of the vehicle. The upper reinforcement portions 5t are formed above central portions of the longitudinal wall portions 5s in the vertical direction and the lower reinforcement portions 5u are formed substantially centrally in the vertical direction.

Lower portions being one lower portions and upper portions of the left and right longitudinal wall portions 5s, 5s bordering on the upper reinforcement portions 5t are expanded outward relative to upper portions, which are the other of the lower portions and the upper portions, in the vehicle breadth direction, and the left and right upper portions not expanded are weld-bonded together. In other words, the upper portions are different in level from the lower portions inwardly in the vehicle breadth direction to provide the upper reinforcement portions 5t.

Also, the lower portions (reinforcement lower portions) bordering on the lower reinforcement portions 5u are recessed inwardly relative to the upper portions (reinforcement upper portions). In other words, the reinforcement lower portions are different in level from the reinforcement upper portions inwardly in the vehicle breadth direction to provide the lower reinforcement portions 5u.

As a result, expanded portions 5v expanded outward from the vehicle relative to the longitudinal wall portions 5s are formed between the both reinforcement portions 5t, 5u, the left and right expanded portions 5v extending obliquely upward to be substantially contiguous to the left and right rear piece portions 7a, 7b.

Here, a vertical dimension H1 of lower, longitudinal wall portions 5s' positioned below the expanded portions 5v of the longitudinal wall portions 5s is set to be larger than a vertical dimension H2 of upper, longitudinal wall portions 5s" positioned above the expanded portions 5v. Also, a dimension W1 of the lower, longitudinal wall portions 5s' in the vehicle breadth direction is set to be larger than a dimension W2 of the upper, longitudinal wall portions 5s" in the vehicle breadth direction.

Pairs of the upper and lower reinforcement ribs 5g are formed integrally on inner surfaces of the left and right expanded portions 5v, and a dimension, by which the respective reinforcement ribs 5g project, is set to be substantially equal to a dimension, by which the expanded portions 5v are expanded.

Outer surfaces of the left and right expanded portions 5v are subjected to surface preparation by buffing. Thereby, the left and right expanded portions 5v give luster to function as an exterior part exposed outside. Also, the upper and lower, longitudinal wall portions 5s", 5s' remain in a state of casting surface and are partially exposed outside. In addition, coating may be applied to outer surfaces of the upper and lower, longitudinal wall portions 5s", 5s'. In the case where such coating is applied, the expanded portions 5v are masked, and in this state, paint is sprayed thereon.

As shown in Fig. 1, the vehicle body cover 13 comprises the head pipe 3, a front cover 18 that covers front portions of the inclined part 5c and the suspension part 5d of the main frame 5, and a rear cover 19 that covers rear portions thereof, and weld-bonded portions of the head pipe 3 and the main frame 5 are covered by the front and rear covers 18, 19.

A rearwardly extending under cover 18a is arranged at a lower end of the front cover 18, the under cover 18a covering left and right side walls and bottom portions of the left and right suspension parts 5d. Also, a side cover 20 is arranged above the under cover 18a. The side cover 20 extends along the lower reinforcement portion 5u of the suspension part 5d to cover the longitudinal wall portion 5s'.

As shown in Figs. 6 and 7, a portion of the rear cover 19 around the main frame 5 includes an upper side portion 19a that covers the upper wall portion 5r of the suspension part 5d, and left and right side portions 19b, 19c that cover the left and right, upper, longitudinal wall portions 5s". The upper side portion 19a and the left and right side portions 19b, 19c extend rearward to cover the front side and the left and right side portions below the main seat 8.

A predetermined clearance s is provided between the upper side portion 19a of the rear cover 19 and the joint of the upper wall portion 5r. Also, lower edges of the left and right side portions 19b, 19c extend longitudinally of the vehicle along the upper stepped portions 5t, and the left and right side portions 19b, 19c are formed in a manner to define surfaces contiguous to the expanded portions 5v, 5v.

In addition, the portion of the rear cover 19 around the main frame 5 may be formed to cover only the upper wall portion 5r as indicated by alternate long and two short dashes line in Fig. 7.

Lower portions of the left and right side portions 19b, 19c are fixed by screwing screws 21 on bosses 5x of the upper, longitudinal wall portions 5s" from outside. Thereby, the rear cover 19 is fixed, in a state, in which the clearance s is maintained between it and the weld-bonded portion of the upper wall portion 5r, in regions away from the weld-bonded portion.

According to the embodiment, the upper and lower reinforcement portions 5t, 5u extending longitudinally of the vehicle are formed on the left and right longitudinal wall portions 5s, which form the suspension parts 5d of the left and right main piece portions 5a, 5b, and the expanded portions 5v expanded outward from the vehicle relative to the longitudinal wall portions 5s are formed between the upper and lower reinforcement portions 5t, 5u, so that it is possible to avoid reduction in surface rigidity in case of enlarging the longitudinal wall portions 5s in area to enhance rigidity.

Also, since the upper and lower reinforcement portions 5t, 5u are formed on the longitudinal wall portions 5s, which are enlarged in area, a change in design is obtained and simplification in outward appearance can be avoided as compared with the case where simple flat surfaces are adopted.

In the embodiment, since the outer surfaces of the expanded portions 5v between the upper and lower reinforcement portions 5t, 5u are subjected to buffing, the expanded portions 5v function as a part of external appearance to enable an improvement in attractiveness. Also, since the expanded portions 5v define convex surfaces, buffing can be readily performed.

Also, since the expanded portions 5v are caused to function as a part of external appearance, a construction can be provided, in which the portions are exposed outside and not covered by the vehicle body cover, so that the vehicle body cover suffices to be made small correspondingly, thus enabling contributing to lightening of the vehicle.

Also, in the embodiment, since the upper side portion 19a of the rear cover 19 covers the weld-bonded portions of the left and right main piece portions 5a, 5b, it is possible to hide the weld bead f to prevent worsening of attractiveness. Also, since the weld bead can be hidden, even a joining method, which causes worsening of attractiveness, can be adopted to lead to reduction in manufacturing cost.

Since the lower portions of the left and right side portions 19b, 19c away from the weld-bonded portions of the rear cover 19 are fixed to the main piece portions and the clearance s is provided between the upper side portion 19a of the rear cover 19 and the weld-bonded portion of the upper wall portion 5r, dimensional errors of the rear cover 19 and the main frame 5 can be absorbed by the clearance s, so that it is possible to heighten the assembling accuracy of the rear cover 19.

Since the vehicle body frame 2 is adopted in the motorcycle 1, it is possible to achieve lightening while increasing the rigidity of the entire motorcycle, and besides it is possible to omit brackets, etc. around the frame, thus enabling reducing the number of parts.

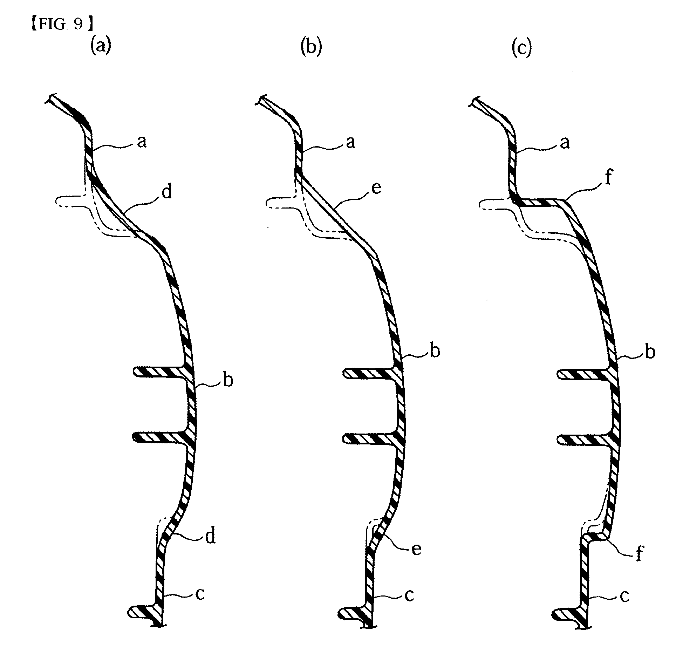

In addition, while the embodiment has been described with respect to the case where the upper reinforcement portions 5t and the lower reinforcement portion 5u are different in level from each other, the reinforcement portions of the invention covers all configurations, such as dented side surfaces, etc., which contribute to enhancement in rigidity against deformation in a direction perpendicular to a surface. For example, as shown in Fig. 9, the reinforcement portions of the invention covers a configuration, in which an upper portion a and a lower portion b, or the lower portion b and a reinforcement lower portion c of a side surface are connected to each other by a smoothly curved connection surface d (Fig. 9(a)), or a straight connection surface e (Fig. 9(b)), or conversely a more sharply angular connection surface f (Fig. 9(c)).

The description above discloses (amongst others) an embodiment of a vehicle body frame for motorcycles, provided by joining left and right frame pieces, which are positioned on the left and the right in a vehicle breadth direction and are formed by casting of a light alloy, and wherein reinforcement portions are formed on side surfaces of the left and right frame pieces to extend longitudinally of a vehicle, and either of lower portions and upper portions of the frame pieces, which border on the reinforcement portions, are expanded outward relative to the other in a vehicle breadth direction.

With the vehicle body frame according to the above embodiment, the reinforcement portions are formed on the side surfaces of the left and right frame pieces so as to be, for example, different in level, and either of the lower portions and the upper portions, which border on the reinforcement portions, are expanded outward relative to the other in the vehicle breadth direction, so that it possible to prevent a decrease in rigidity of wall surfaces against deformation in a direction perpendicular to a surface in the case where side walls of the left and right frame pieces are enlarged in area.

Also, since the reinforcement portions are formed on side surfaces of the frame to extend longitudinally of the vehicle, the reinforcement portions can form character lines along the length of the vehicle or the like to obtain a change in design and simplification in outward appearance can be avoided as compared with the case where simple flat surfaces are adopted. As a result, in the case where the side surfaces of the left and right frame pieces are not covered by the vehicle body frame, the change in design can improve the outward appearance.

Preferably, the left and right frame pieces comprise left and right main piece portions, which extend from a head pipe, which supports a front fork, toward the rear of a vehicle, and support an engine unit, the left and right main piece portions include wall surfaces extending in a vertical direction and a longitudinal direction, and the reinforcement portions are formed on the wall surfaces.

With this embodiment, the wall surfaces of the main piece portions extending in a vertical direction and a longitudinal direction are large in area to be liable to be deformed in a direction perpendicular to a wall surface, but the reinforcement portions are formed on the wall surfaces to enable effectively preventing a decrease in rigidity against deformation of the wall surfaces.

Further, preferably the other of the left and right frame pieces is weld-bonded. With this embodiment, preferably one of the upper portions and the lower portions of the frame piece, which is not expanded outward in the vehicle breadth direction, is weld-bonded, so that the work of welding and assembling the frame piece is easy and sure. Still further preferably, the reinforcement portions are different in level.

Further preferably, the reinforcement portions are different in level.

Still further, preferably the lower portions on the side surfaces of the left and right frame pieces are expanded outward relative to the upper portions in the vehicle breadth direction. Yet further, preferably lower reinforcement portions are formed on the lower portions to extend longitudinally of the vehicle, and reinforcement lower portions bordering on the lower reinforcement portions of the lower portions are recessed inward relative to reinforcement upper portions in the vehicle breadth direction.

Also, if the lower portions of the left and right frame pieces are expanded outward relative to the upper portions, and if the lower reinforcement portions are further formed on the lower portions, which are expanded outward in the vehicle breadth direction, and the reinforcement lower portions positioned below the lower reinforcement portions are recessed inward, it is possible to further surely avoid a decrease in rigidity in the case where the side walls are enlarged in area, and to further surely obtain a change in design.

A further embodiment comprises a vehicle body cover that covers the vehicle body frame so as to have the expanded portions exposed outside.

Accordingly, since the expanded portions of the left and right frame pieces are exposed in the case where the vehicle body frame is covered by the vehicle body cover, it suffices that the vehicle body cover is correspondingly made small, thus enabling contributing to lightening of the vehicle body.

According to another embodiment, outer surfaces of at least one of the upper portions and the lower portions on the side surfaces of the left and right frame pieces, which border on the reinforcement portions, are subjected to surface preparation. Also, the invention of claim 9 adds to claim 8 a feature that those portions on the side surfaces of the left and right frame pieces, which are expanded outward in the vehicle breadth direction, are subjected to buffing.

Accordingly, since at least one of the upper portions and the lower portions, which border on the reinforcement portions, is subjected to surface preparation, by performing different surface preparations, such as buffing on the lower portions and coating on the upper portions, the frame piece is caused to function as a part of outward appearance and not covered by the vehicle body cover, thus enabling heightening the outward appearance.

Within the embodiment above, it would be further preferable if those portions on the side surfaces of the left and right frame pieces, which are expanded outward in the vehicle breadth direction, are subjected to buffing.

According to this embodiment, those portions on the side surfaces of the left and right frame pieces, which are expanded outward in the vehicle breadth direction, are subjected to buffing, so that buffing can be readily performed. That is, it is difficult to apply buffing only on a part of a flat surface, or a recessed portion, but it is easy to apply buffing on a convex surface expanded outside the vehicle.

According to a further embodiment, joint portions of the left and right frame pieces are covered by a cover, and the invention of claim 11 adds to claim 10 a feature that the cover is fixed in a location away from the joint portions of the left and right frame pieces, and a clearance is formed between the cover and the joint portions.

With this embodiment, since the joint portions of the left and right frame pieces are covered by a cover, the left and right frame pieces, for example, weld trace (bead) in case of weld-bonding, can be hidden, thus enabling preventing worsening of attractiveness. With the invention of claim 11, since the cover is fixed in a location away from the joint portions and a clearance is formed between the cover and the joint portions, dimensional errors of the cover and the vehicle body frame can be absorbed by the clearance, so that it is possible to heighten the assembling accuracy. In this case, the cover can be readily mounted even when weld beads involve dispersion in height.

According to another embodiment, the cover is fixed in a location away from the joint portions of the left and right frame pieces, and a clearance is formed between the cover and the joint portions.

According to another embodiment, either the upper portions or the lower portions of the left and right frame pieces, which border on the reinforcement portions, are formed with a boss for mount of a part, and the invention of claim 13 adds to claim 12 a feature that the boss serves for mounting of a cover, which covers the joint portions of the left and right frame pieces, or for mounting of a foot board.

With this embodiment, since a boss for mounting of, for example, a cover or a foot board is formed on those side surfaces of the left and right frame pieces, which are not expanded outward in the vehicle breadth direction, these parts can be mounted without addition of any exclusive support bracket and without a considerable increase in vehicle breadth. Also, when a foot board is mounted, the foot board is hard to strike against the road surface at the time of vehicle bank, and a bank angle can be correspondingly increased.

According to a further preferred embodiment, the boss serves for mounting of a cover, which covers the joint portions of the left and right frame pieces, or for mounting of a foot board.

According to a further preferred embodiment, there is provided a cross member that connects the other of the upper portions or the lower portions of the left and right frame pieces, which border on the reinforcement portions.

With this embodiment, since the cross member connects those side surfaces of the left and right frame pieces, which are not expanded outward in the vehicle breadth direction, it is possible to avoid a decrease in rigidity in the case where the side walls of the left and right frame pieces are increased in area.

The description above further provides an embodiment of a motorcycle comprising the vehicle body frame according to any one of the above embodiments.

With this embodiment, since the vehicle body frame is adopted in a motorcycle, it is possible to achieve lightening while heightening a whole motorcycle in rigidity, and it becomes possible to omit brackets or the like around the frame, thus enabling reduction in the number of parts.

The description above discloses, as a preferred embodiment of a vehicle body frame for motorcycles, capable of preventing reduction in surface rigidity and achieving an improvement in outward appearance in the case where side surfaces of left and right frame pieces are enlarged, a vehicle body frame for motorcycles, is provided by joining left and right frame pieces 2a, 2b, which are positioned on the left and the right in a vehicle breadth direction and are formed by casting of a light alloy, stepped portions 5t are formed on sides (longitudinal wall portions) 5s of the left and right frame pieces 2a, 2b, and lower portions (expanded portions 5v) bordering on the stepped portions 5t are expanded outward relative to upper portions (upper, longitudinal wall portions 5s") in the vehicle breadth direction.

## Claims

1. Vehicle body frame, in particular for motorcycles, having joined frame pieces, wherein reinforcement portions are formed on side surfaces of the frame pieces to extend longitudinally of a vehicle, and either of lower portions and upper portions of the frame pieces, which border on the reinforcement portions, are expanded outward relative to the other in a vehicle width direction.

2. Vehicle body frame according to claim 1, being provided by joining left and right frame pieces, which are positioned on the left and the right in the vehicle width direction and are formed by casting of a light alloy, wherein the reinforcement portions are formed on side surfaces of the left and right frame pieces to extend longitudinally of the vehicle, and either of lower portions and upper portions of the left and right frame pieces, which border on the reinforcement portions, are expanded outward relative to the other in a vehicle width direction.

3. Vehicle body frame according to claim 2, wherein the left and right frame pieces comprise left and right frame piece portions, which extend from a head pipe, which supports a front fork, toward the rear of a vehicle, and support an engine unit, the left and right frame piece portions include wall surfaces extending in a vertical direction and a longitudinal direction, and the reinforcement portions are formed on the wall surfaces.

4. Vehicle body frame according to one of the claims 1 to 3, wherein the frame pieces are weld-bonded.

5. Vehicle body frame according to one of the claims 1 to 4, wherein the reinforcement portions are different in level.

6. Vehicle body frame according to one of the claims 1 to 5, wherein the lower portions on the side surfaces of the frame pieces are expanded outward relative to the upper portions in the vehicle width direction.

7. Vehicle body frame according to claim 6, wherein lower reinforcement portions are formed on the lower portions to extend longitudinally of the vehicle, and reinforcement lower portions bordering on the lower reinforcement portions of the lower portions are recessed inward relative to reinforcement upper portions in the vehicle width direction.

8. Vehicle body frame according to one of the claims 1 to 7, further comprising a vehicle body cover that covers the vehicle body frame so as to have the expanded portions exposed outside.

9. Vehicle body frame according to one of the claims 1 to 8, wherein outer surfaces of at least one of the upper portions and the lower portions on the side surfaces of the frame pieces, which border on the reinforcement portions, are subjected to surface preparation.

10. Vehicle body frame according to claim 9, wherein those portions on the side surfaces of the frame pieces, which are expanded outward in the vehicle width direction, are subjected to buffing.

11. Vehicle body frame according to one of the claims 1 to 10, wherein joint portions of the left and right frame pieces are covered by a cover.

12. Vehicle body frame according to claim 11, wherein the cover is fixed in a location away from the joint portions of the left and right frame pieces, and a clearance is formed between the cover and the joint portions.

13. Vehicle body frame according to one of the claims 1 to 12, wherein either the upper portions or the lower portions of the frame pieces, which border on the reinforcement portions, are formed with a boss for mount of a part.

14. Vehicle body frame according to claim 13, wherein the boss serves for mounting of a cover, which covers the joint portions of the left and right frame pieces, or for mounting of a foot board.

15. Vehicle body frame according to one of the claims 1 to 14, further comprising a cross member that connects the other of the upper portions or the lower portions of the frame pieces, which border on the reinforcement portions.

16. Motorcycle comprising the vehicle body frame according to one of claims 1 to 15.
